# EUROPÄISCHE PATENTSCHRIFT

(11) **EP 1 139 830 B1**
(45) Veröffentlichungstag und Bekanntmachung des Hinweises auf die Patenterteilung: **19.03.2003**
(21) Anmeldenummer: 99965550.9
(22) Anmeldetag: 24.12.1999
(51) Int. Cl.: A47J 27/21, A47J 31/20

(54) **WASSERKOCHER MIT SICHERHEITSABSCHALTUNG**
KETTLE WITH SECURITY CUT-OFF
BOUILLOIRE AVEC MISE HORS CIRCUIT DE SECURITE

(30) Priorität: 30.12.1998 DE 19860931
(43) Veröffentlichungstag der Anmeldung: 10.10.2001
(73) Patentinhaber: Efbe Elektrogeräte GmbH, 07422 Bad Blankenburg (DE)
(72) Erfinder: HEINZE, Bernd, D-07462 Königsee (DE)
(74) Vertreter: Gulde, Klaus W., Dipl.-Chem.
(86) Internationale Anmeldenummer: EP9910357
(87) Internationale Veröffentlichungsnummer: WO00040128

(56) Entgegenhaltungen:
- EP-A- 0 419 368
- EP-A- 0 528 656
- DE-A- 3 222 542
- DE-A- 19 706 523
- DE-U- 8 915 662

## Beschreibung

Die Erfindung betrifft einen Wasserkocher mit Sicherheitsabschaltung gemäß dem Oberbegriff des Anspruches 1.

Wasserkocher mit Sicherheitsabschaltung sind bekannt. Sie bestehen in der Regel aus einem Wasserbehälter aus Kunststoff, an dem ein Haltegriff angeformt ist. Im unteren Teil des Wasserbehälters befinden sich Heizelemente, die nach dem Plazieren auf einen mit einer Stromquelle verbundenen Sockel mittels eines Schalters eingeschaltet werden können. Nach dem Erreichen der Siedetemperatur schaltet sich das Gerät ab.

Diese Geräte haben verschiedene Nachteile. So ist es nicht möglich, über eine Temperaturregelung vorab bestimmte Wassertemperaturen unterhalb des Siedepunktes einzustellen. Diese unteren Wassertemperaturen eignen sich insbesondere zur Kaffee- und Teebereitung auf der Grundlage von Instantprodukten. Des weiteren ist es auch nicht möglich mit den bisher bekannten Wasserkochern Kaffee oder Tee zu bereiten, ohne daß der Kaffee- oder Teegrund sauber vom Extrakt getrennt werden kann.
Des weiteren ist es bei den bekannten Wasserkochern bisher nicht möglich gewesen, die bei längerem Gebrauch auftretenden Kalkreste wirkungsvoll beim Ausgießen des kochenden Wassers zurückzuhalten.

Aus der DE-U 89 15 662 ist ein Elektrokochgerät für das Erwärmen von Flüssigkeiten bekannt, bei dem der Wasserbehälter mit einer das Unterteil bildenden Aluminiumbodenplatte, in welche ein Rohrheizkörper eingebettet ist, durch Reibschweißung verbunden ist.
In dieser Aluminiumbodenplatte ist für ein direktes Erfassen der Wärme ein Wärmesensor (Thermistor) angeordnet.

Die Bauelemente für die Temperaturregelung sind im unteren Bereich eines den Wasserbehälter aufnehmenden Ständers angeordnet. Des weiteren ist im oberen Teil des in diesem Bereich als Griff ausgebildeten Ständers ein dem Rand des Wasserbehälters gegenüberstehender Dampfsensor zur Abschaltung der Energiezufuhr bei Erreichen einer bestimmten Temperatur angeordnet. Der Deckel des Wasserbehälters weist eine Leitvorrichtung auf, die den beim Kochern entstehenden Dampf auf den im oberen Bereich des Ständergriffs befindlichen Dampfsensor leitet.
Für die Entnahme des Wasserbehälters aus dem Ständer ist ein zusätzlicher Griff am Wasserbehälter vorgesehen.

Die Ausführung dieses Wasserkochers besitzt jedoch Nachteile derart, daß der Wasserbehälter und das Unterteil aus metallischen Werkstoffen bestehen, wodurch eine ungewollte Wärmeabstrahlung begünstigt wird.
Bei einer Entnahme des Wasserbehälters in der Kochphase aus dem Ständer besteht die Gefahr, dass noch heißer Dampf über die Leiteinrichtung im Deckel in Richtung der bedienenden Person ausströmt und so Verbrühungen eintreten können.
Der Griff am Wasserbehälter für die Entnahme aus dem Ständer bedeutet ein zusätzliches Bauteil.
Die Anordnung der Bauelemente für die Temperaturregelung im unteren Bereich des Ständers hat den Nachteil, dass Feuchtigkeit in diesen Bereich eindringen kann, so dass besondere Maßnahmen für die Abdichtung dieses Bereiches erfolgen müssen.

Aus der DE-A1 197 06 523 ist eine Vorrichtung zur Zubereitung heißer, zu filternder Getränke bekannt.

Der Wasserbehälter ist hier auf einem Sockel angeordnet über den die Stromzuführung zu der den Bodenbereich des Wasserbehälters bildenden elektrischen Heizvorrichtung erfolgt, wobei diese Heizvorrichtung mit einer Thermostateinrichtung versehen ist, die ein Abschalten der Heizplatte bewirkt, sobald das Wasser in dem Behälter siedet.
Diese Vorrichtung weist keine Bauelemente für ein Umschalten auf ein Temperaturniveau unterhalb des Siedebereiches auf. Damit besitzt dieses Gerät nur eine eingeschränkte Multifunktionalität.

In der EP-A1 0 528 656 wird eine Einrichtung für das Abschalten der Energiezuführung und eine Einrichtung für Temperatureinstellungen unterhalb des Siedebereiches offenbart.
Die Baugruppe für das Abschalten der Energiezuführung ist in verschiedenen Ausführungsformen, einmal als Dampfsensor im oberen Bereich des Wasserbehälters bzw. direkt am Wasserbehälter angeordnet.
Ferner wird ein der Kontur des Wasserbehälter angepasstes Gehäuse, dargestellt, welches diese Steuerungsbaugruppe abdeckt, wobei dieses Gehäuse gleichzeitig als Griff für den Wasserbehälter ausgebildet ist.

Der Erfindung liegt die Aufgabe zugrunde, bei einem Wasserkocher gemäß dem Oberbegriff des Anspruchs 1, neben der Gewährleistung der Multifunktionalität eine neuartige Verbindung zwischen dem Wasserbehälter und dem die Heizung, Temperaturbegrenzungselemente sowie die Temperaturregel- bzw. Einstellbaugruppen aufnehmenden Unterteil zu schaffen, mit dem Ziel, zum einen die erforderlichen Baugruppen in einfacher Form herstellen zu können und zum anderen die Handhabung des Wasserkochers für den Benutzer einfacher und sicherer zu machen.

Die Lösung der Aufgabe erfolgt gemäß den kennzeichnenden Merkmalen des Anspruches 1.

Die Vorteile, die durch die Erfindung erreicht werden, bestehen darin, dass durch die Einbeziehung des Griffs in die kraft- und formschlüssige Verbindung zwischen dem Wasserbehälter mit dem Unterteil eine größere Stabilität der Verbindung bewirkt wird, wodurch die Anwendung der Klebetechnik für die Schaffung der Verbindung begünstigt wird, was wiederum den Einsatz von unterschiedlichen Werkstoffgruppen für die zu verbindenden Bauteile (z.B. Wasserbehälter aus Glas, Griff und Wandung des Unterteils aus wärmebeständigem Kunststoff sowie Heizung aus Metall) ermöglicht, wodurch beispielsweise eine Gewichtsverringerung gegenüber bekannten Wasserkochern möglich wird.

Eine besonders vorteilhafte erfindungsgemäße Weiterbildung besteht darin, dass der Dampf-Stop-Schalter im oberen Bereich des Griffes des Wasserbehälters vorgesehen ist, wodurch beim Abheben des Wasserbehälters vom Sockel, über welche die Stromversorgung zur Heizung erfolgt, keine Trennung zwischen dem Dampfaustritt und dem Dampf-Stop-Schalter erfolgt.

Die gemäß Anspruch 2 vorgesehene Halterung, die unmittelbar am Wasserbehälter fixiert ist, in Verbindung mit der gemäß Anspruch 3 vorgesehenen Verklebung des Wasserbehälters oberhalb der Heizung, ermöglicht es, unterschiedliche Werkstoffe für die zu verbindenden Bauteile zu verwenden, insbesondere formbeständige Glasbehälter einzusetzen.

Die gemäß der Ansprüche 6 bis 9 vorgesehene Ausbildung des Deckels des Wasserkochers ermöglicht auf vorteilhafte Weise ein Abdichten gegen austretenden Wasserdampf, ein Überleiten des Wasserdampfes im Falle des Siedens des Wassers zu einem Dampf-Stop-Schalter, der die Sicherheitsabschaltung gewährleistet und die Zurückhaltung von Kalkteilchen beim Ausgießen des Wassers.
Vorteilhafterweise ermöglicht die Zahnung im Wasseraustrittsbereich der rundumlaufenden Silikondichtung ein restloses Ausgießen allen Wassers oder allen Brühgutes aus dem Gefäß. Darüberhinaus ist aufgrund der umlaufenden Dichtlippen in Verbindung mit der Lasche für die Arretierung des Deckels immer die Abgabe einer exakt definierten Durchflußmenge, unabhängig vom Ausgußwinkel, gegeben.

Gemäß der Ausgestaltungen der Ansprüche 11, 12 und 13 ist eine effektive Unterbringung des Anschlußkabels im Sockel möglich. Da die Sockelwandung Kabelaustrittsöffnungen aufweist, die gleichzeitig das Kabel in der Wandung fixieren, ist eine vorteilhafte, frei wählbare Anschlußlänge möglich.

In einer besonderen Ausführungsvariante sind drei Öffnungen für den Austritt und für die Fixierung des Kabels vorgesehen.

Die Weiterbildung des Anspruches 14, die die Anbringung von Anti-Rutschnoppen vorsieht, bewirkt eine sichere Standfestigkeit des Gerätes.

Die Erfindung wird im folgenden an einem Ausführungsbeispiel und einer Zeichnung näher erläutert. Es zeigen
- Fig. 1: eine Schnittdarstellung des Wasserkochers
- Fig. 2: eine Schnittdarstellung des Wasserkochers mit einem Stabsieb,
- Fig. 3: ein geschnittene Darstellung eines Deckels in Draufsicht,
- Fig. 4: eine geschnittene Seitenansicht des Deckels,
- Fig. 5: eine geschnittene Ansicht eines Dichtungshalters von unten,
- Fig. 6: Seitenansicht eines Dichtungshalters mit Kalkfilter,
- Fig. 7: eine Draufsicht einer Dichtung mit Zahnung,
- Fig. 8: eine geschnittene Seitenansicht eines Sockels mit eingelegtem Kabel.

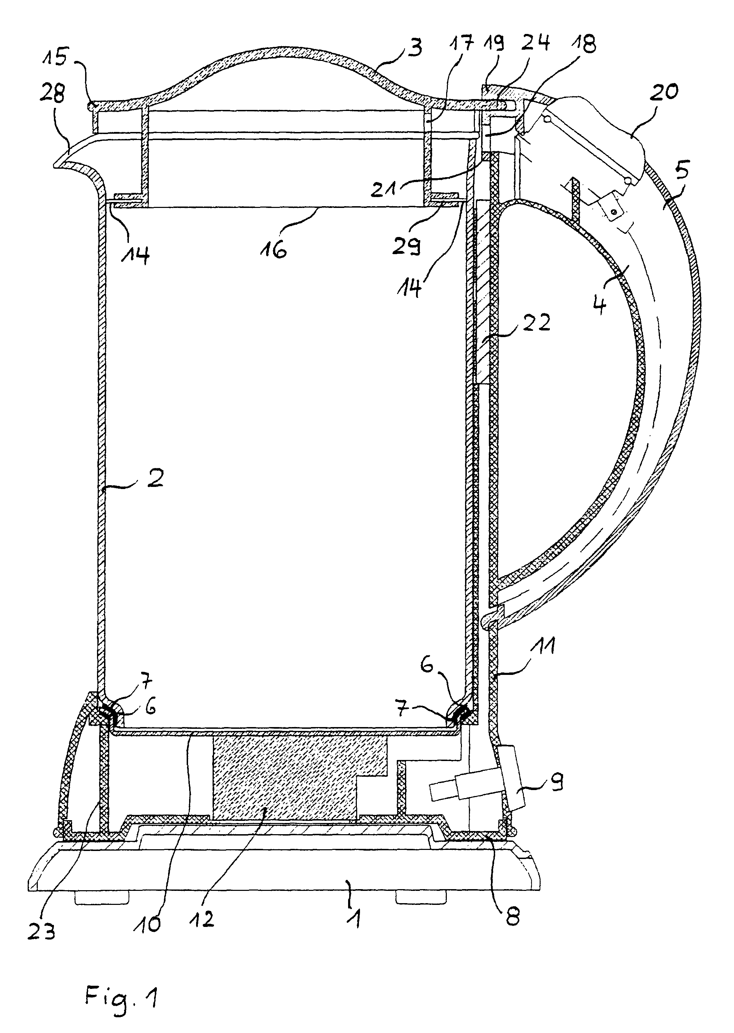

Der erfindungsgemäße Wasserkocher in der Darstellung gemäß Fig. 1 ist auf einem Sockel 1, der die Verbindung mit einer hier nicht dargestellten Stromquelle herstellt, angeordnet. In einem Boden 8, als Teil eines Unterteiles 11, sind ein als Wippenschalter ausgebildeter Umschalter 9, eine Heizung 10, die auf einer rundumlaufenden Heizungsabstützung 23 gelagert ist, angeordnet. Ein Kontaktelement 12 stellt die stromleitende Verbindung vom Sockel 1 zur Heizung 10 her. Auf der Heizung 10 ist ein Wasserbehälter 2 fixiert. Die Fixierung des Wasserbehälters 2 ist über die ebenfalls rundumlaufenden Klebstellen 6 und 7 realisiert. Die Klebstellen 6 und 7 verhindern gleichzeitig das Eintreten von Feuchtigkeit in den Bereich zwischen der Heizung 10 und dem Wasserbehälter 2. Darüberhinaus kann mit dem Eintrag von elastischen Klebern, z. B. auf Silikonbasis, der Ausgleich von unterschiedlichen Abmaßen der Wasserbehälter erfolgen. Gegenüber einer dem Ausgießen dienenden Schnaupe 28 ist in vertikaler Richtung zum Boden 8 hin eine Halterung 22 mit dem Wasserbehälter 2 fest verbunden. An dieser Halterung 22 ist über eine dort vorgesehene T-Nut ein Griff 4, der mit dem Unterteil 11 eine Einheit bildet, kraft- und formschlüssig mit dem Wasserbehälter verbunden. Der Griff 4 ist mit einer Griffabdeckung 5 verkleidet, die über eine Einhängung 21 ebenfalls am Wasserbehälter 2 fixiert ist. Im oberen Bereich des Griffes 4 ist ein Dampf-Stop-Schalter 20 angeordnet.

Ein Deckel 3 bildet den oberen Abschluß des Wasserbehälters 2. Der Deckel 3 besteht aus einem Deckeloberteil 15 und einem Dichtungshalter 16. Das Deckeloberteil 15 weist eine Lasche 24 auf, die in eine Deckelarretierung 19, ein Teil der Griffabdeckung 5, durch Drehung des Deckels 3 einschiebbar ist. Auf diese Weise ist der gesamte Deckel 3 auf dem Wasserbehälter 2 sicher fixiert. Beim umfallen des Wasserkochers bleibt der Deckel 3 verschlossen. Der Dichtungshalter 16 weist mehrere Funktionselemente auf. Eine rundumlaufende Dichtung 14, die in einer Nut 29 eingelegt ist, gewährleistet ein vollständiges Abdichten gegenüber austretendem Wasserdampf. Im Falle des Erreichens der Siedetemperatur des Wassers tritt der Wasserdampf durch einen Dampfaustritt 17 des Dichtungshalters 16 in einen Dampfkanal 18 des Griffes, über den eine Verbindung zum Dampf-Stop-Schalter 20 hergestellt wird. Ein Bimetall-Element sorgt dann dafür, daß der Dampf-Stop-Schalter 20 die Heizung 10 abschaltet. Einen ebenfalls im Dichtungshalter 16 vorgesehenen Wasserauslaß 13, der mit einem Kalkfilter 36 versehen ist, erlaubt es über die Schnaupe 28 das kochende Wasser bzw. sonstiges Brühgut auszugießen.

Der Umschalter 9 im Boden 8 des Unterteiles 11 dient der Temperaturbegrenzung. Hier ist es möglich, durch Betätigung des Umschalters 9 wassertemperaturen einzustellen, die unterhalb der Siedetemperatur liegen. Dadurch kann man vorteilhafterweise Instantprodukte mit Wasser geeigneter Temperatur vermischen.

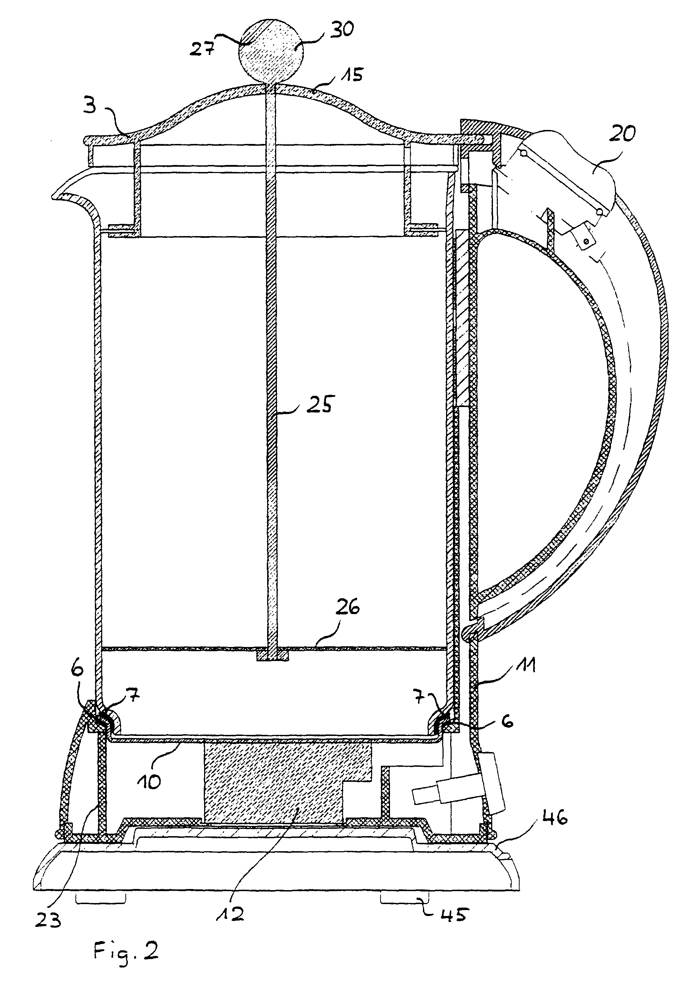

Fig. 2 zeigt den erfindungsgemäßen Wasserkocher in einer Ausführung mit Stabsieb 30 für die Kaffee- und Teefilterung. Eine durch das Deckeloberteil 15 des Deckels 3 geführte Haltestange 25 ermöglicht das vertikale Verschieben des Siebfilters 26 für die Tee- und Kaffeebereitung. Mittels eines Knaufes 27 ist die vertikale Auf- und Abwärtsbewegung der Haltestange 25 ohne große Mühe möglich.

Der beim Zusammenpressen des Kaffee- oder Teegrundes mit der Haltestange 25 und dem Siebfilter 26 ausgeübte Druck auf die Heizung 10 wird durch eine umlaufende Heizungsabstützung 23 abgefangen, so daß keine Beschädigungen der Heizung 10 und der Klebstellen 6 und 7 entstehen können.

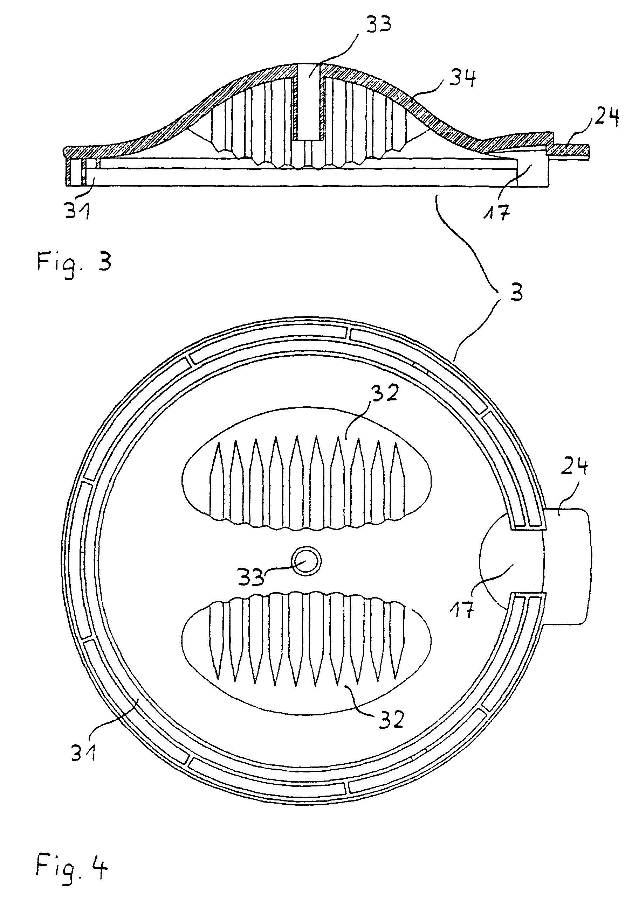

In Fig. 3 ist ein Deckeloberteil 15 des Deckels 3 in geschnittener Draufsicht dargestellt. Zentrisch angeordnet ist eine Haltestangenführung 33, in die die Haltestange 25 des Stabsiebes 30 durchführbar ist.

In der Darstellung gemäß Fig. 4 ist diese Haltestangendurchführung 33 nicht in Funktion, da eine Durchbohrung durch einen angeformten Haltegriff 34 des Deckeloberteils 15, der beidseitig zwei Griffmulden 32 aufweist, in einer weiteren Ausbildung des Deckels 3 nicht vorgesehen ist.

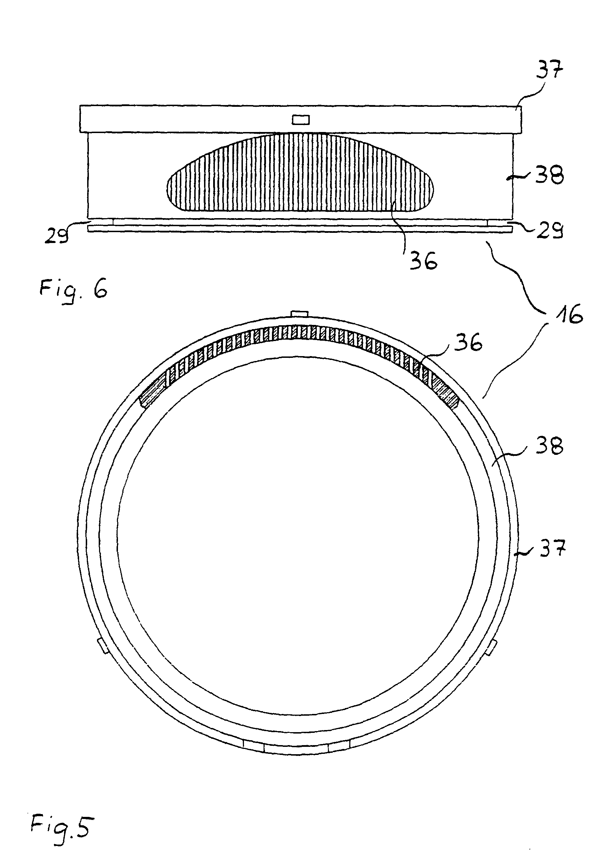

In eine Vertikalnut 31 ist die Aufnahme eines Randes 37 eines Dichtungshalters 16 möglich. Der Dichtungshalter 16 ist in Fig. 5 und Fig. 6 in zwei verschiedenen Darstellungen beispielhaft beschrieben. Ein in einer Wandung 38 eingelassener Kalkfilter 36 im Wasseraustrittsbereich ermöglicht das Zurückhalten von Kalkablagerungen.

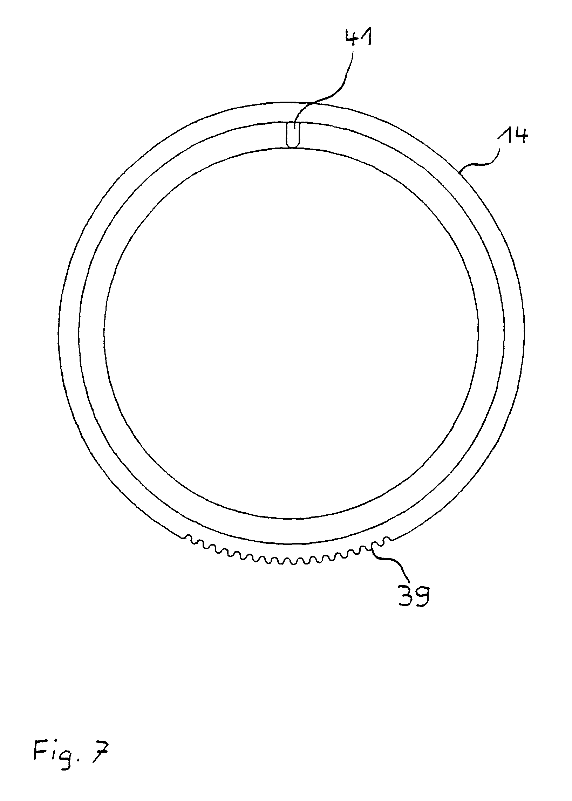

In eine Nut 29 ist die Dichtung 14, die in Fig. 7 dargestellt ist, umlaufend einlegbar. Die Dichtung 14 weist in ihrem Außenbereich eine Zahnung 39 auf, die im Wasseraustrittsbereich anzuordnen ist.
Eine Noppe 41 dient der Fixierung der Dichtung 14 in der Nut 29 des Dichtungshalters 36.

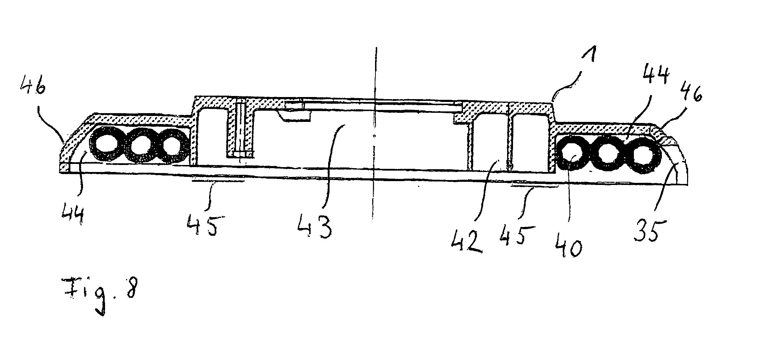

Fig. 8 zeigt die vorteilhafte Anordnung eines Kabels 40 in einem Kabelaufnahmeraum 44 des Sockels 1. Das zur Verbindung zum Netz dienende Kabel 40 ist um eine Zugentlastung 42 gewickelt. Die Zugentlastung 42 umschließt wiederum einen elektrischen Anschlußbereich 43 des Sockels 1. Von der Unterseite des Sockels 1 ist das Kabel 40 über eine rundumlaufende, hier nicht dargestellte Öffnung um die Zugentlastung 42 herum aufwickelbar. In einer Seitenwand 46 des Sockels 1 sind Kabelfixierungsöffnungen 35 vorgesehen, die eine Herausführung und gleichzeitige Fixierung des Kabels 40 aus dem Kabelaufnahmeraum 44 ermöglicht. Durch die Anordnung von mehreren Kabelfixierungsöffnungen 35, in einer vorteilhaften Ausführung sind es drei Kabelfixierungsöffnungen 35, ist es möglich, die Anschlußlänge des Kabels 40 frei zu wählen. Die untere Aufsetzfläche des Sockels 1 sind mit Anti-Rutschnoppen 45 für den sicheren Stand versehen.

### Bezugszeichenliste

- 1: Sockel
- 2: Wasserbehälter
- 3: Deckel
- 4: Griff
- 5: Griffabdeckung
- 6: Klebstelle
- 7: Klebstelle
- 8: Boden
- 9: Umschalter
- 10: Heizung
- 11: Unterteil
- 12: Kontaktelement
- 13: Wasserauslaß
- 14: Dichtung
- 15: Deckeloberteil
- 16: Dichtungshalter
- 17: Dampfkanal
- 18: Dampfaustritt
- 19: Deckelarretierung
- 20: Dampf-Stop-Schalter
- 21: Einhängung
- 22: Halterung
- 23: Heizungsabstützung
- 24: Lasche
- 25: Haltestange
- 26: Siebfilter
- 27: Knauf
- 28: Schnaupe
- 29: Nut
- 30: Stabsieb
- 31: Vertikalnut
- 32: Griffmulde
- 33: Haltestangenführung
- 34: Deckelgriff
- 35: Kabelfixierungsöffnung
- 36: Kalkfilter
- 37: Rand
- 38: Wandung
- 39: Zahnung
- 40: Kabel
- 41: Noppe
- 42: Zugentlastung
- 43: Anschlußbereich
- 44: Kabelaufnahmeraum
- 45: Anti-Rutschnoppen
- 46: Seitenwand

## Patentansprüche

1. Wasserkocher mit Sicherheitsabschaltung bei welchem ein Wasserbehälter mit Unterteil (11) auf einen Sockel (1) für die Stromversorgung aufgesetzt wird, wobei in dem Unterteil eine Heizung (10) und ein Temperaturbegrenzer angeordnet sind und ein Deckel (3), mit einem integrierten Dampfaustritt (17), welcher mit oder ohne einer integrierten Haltestangenführung (33) für ein Stabsieb (30) versehen ist, auf dem Wasserbehälter (2) aufsetzbar ist,
**dadurch gekennzeichnet, dass**
der Wasserbehälter (2) mit einem einen Griff (4) aufweisenden Unterteil (11) kraft- und formschlüssig verbunden ist,
der Deckel (3) zweiteilig, bestehend aus einem Deckeloberteil (15) und einem Dichtungshalter(16), ausgebildet ist,
und mittels einer am Deckeloberteil (15) vorgesehenen Lasche (24), die in eine Deckelarretierung (19) des Griffes (4) bzw. der Griffabdeckung (5) eingreift, auf dem Wasserbehälter (2) arretierbar ist,
dass in einem Boden (8) des Unterteils (11) ein mit dem Temperaturbegrenzer verbundener Umschalter (9) angeordnet ist
und dass in dem Griff (4), mit welchem der Wasserbehälter (2) und das mit ihm verbundene Unterteil (11) von dem Sockel (1) abnehmbar ist, ein Dampf-Stop-Schalter (20) integriert ist, der über einen Dampfkanal (18) mit dem Dampf austritt (17) des Deckels (3) in Verbindung steht.

2. Wasserkocher nach Anspruch 1,
**dadurch gekennzeichnet, daß**
der Wasserbehälter (2) eine Halterung (22) im Griffbereich des Unterteiles (11) aufweist.

3. Wasserkocher nach Anspruch 1 oder 2,
**dadurch gekennzeichnet, daß**
der Wasserbehälter (2) mit seinem unteren Kantenbereich mit der Heizung (10) verklebt ist.

4. Wasserkocher nach einem der Anspruche 1 bis 3,
**dadurch gekennzeichnet, daß**
der Griff (4) einschließlich einer Griffabdeckung (5) an der Halterung (22) fixiert ist.

5. Wasserkocher nach einem der Ansprüche 1, 2, und 4,
**dadurch gekennzeichnet, daß**
der. Dampf-Stop-Schalter (20) im oberen Bereich des Griffes (4) angeordnet ist.

6. Wasserkocher nach Anspruch 1,
**dadurch gekennzeichnet, daß**
der Dichtungshalter (16) des Deckels (3) eine in eine Nut (29) eingelegte, rundumlaufende Dichtung (14) aufweist.

7. Wasserkocher nach Anspruch 1 und 6,
**dadurch gekennzeichnet, daß**
der Dichtungshalter (16) einen Dampfaustritt (17) und einen Wasserauslaß (13) aufweist.

8. Wasserkocher nach einem der Ansprüche 1, 6 und 7,
**dadurch gekennzeichnet, daß**
der Wasserauslaß (13) einen Kalkfilter (36) aufweist.

9. Wasserkocher nach einem der Ansprüche 1 sowie 6 bis 8,
**dadurch gekennzeichnet, daß**
die Dichtung (14) im Bereich des Wasserauslasses (13) eine Zahnung (39) aufweist.

10. Wasserkocher nach Anspruch 1,
**dadurch gekennzeichnet, daß**
der Temperaturbegrenzer (9) einen begrenzbaren Temperaturbereich von 50°-80°C aufweist.

11. Wasserkocher nach Anspruch 1,
**dadurch gekennzeichnet, daß**
der Sockel (1) ein von seiner Unterseite zugänglichen um einen Anschlußbereich (43) herum angeordneten Kabelaufnahmeraum (44) aufweist, in dem ein Kabel (40) unterbringbar ist.

12. Wasserkocher nach einem der Ansprüche 1 und 11,
**dadurch gekennzeichnet, daß**
das Kabel (40) um eine Zugentlastung (42) herum aufwickelbar ist.

13. Wasserkocher nach einem der Ansprüche 1 sowie 11 und 12,
**dadurch gekennzeichnet, daß**
eine Seitenwand (46) Kabelfixieröffnungen (35) aufweist, durch die das Kabel (40), die benötigte Länge fixierend, herausführbar ist.

14. Wasserkocher nach einem der Ansprüche 1 und 11,
**dadurch gekennzeichnet, daß**
auf der Unterseite des Sockels (1) Anti-Rutschnoppen (45) angeordnet sind.

## Claims

1. Kettle having a security cut-off, in which a water container having a lower part (11) is placed on a pedestal (1) for the power supply, a heater (10) and a thermostat being disposed in the lower part and a lid (3), having an integrated steam outlet (17), which may or may not be provided with an integrated holding bar guide (33) for a rod-type filter (30), can be placed on the water container (2), **characterized in that** the water container (2) is connected by both non-positive and positive fitting to a lower part (11) having a handle (4), the lid (3) is of two-part configuration, consisting of a lid upper part (15) and a seal holder (16), and can be locked on the water container (2) by means of a tab (24) provided on the lid upper part (15) and engaging into a lid lock (19) of the handle (4) or of the handle cover (5), **in that** a two-way switch (9) connected to the thermostat is disposed in a base (8) of the lower part (11), and **in that** a steam stop switch (20) is integrated in the handle (4) by means of which the water container (2) and the lower part (11) connected thereto can be removed from the pedestal (1) and is in connection via a steam duct (18) with the steam outlet (17) of the lid (3).

2. Kettle according to Claim 1, **characterized in that** the water container (2) comprises a mounting (22) in the handle region of the lower part (11).

3. Kettle according to Claim 1 or 2, **characterized in that** the water container (2) is adhesively bonded by its lower edge region to the heater (10).

4. Kettle according to one of Claims 1 to 3, **characterized in that** the handle (4), including a handle cover (5), is fixed on the mounting (22).

5. Kettle according to one of Claims 1, 2 and 4, **characterized in that** the steam stop switch (20) is disposed in the upper region of the handle (4).

6. Kettle according to Claim 1, **characterized in that** the seal holder (16) of the lid (3) comprises a peripheral seal (14) laid in a groove (29).

7. Kettle according to Claims 1 and 6, **characterized in that** the seal holder (16) comprises a steam outlet (17) and a water outlet (13).

8. Kettle according to one of Claims 1, 6 and 7, **characterized in that** the water outlet (13) comprises a lime filter (36).

9. Kettle according to one of Claims 1 and 6 to 8, **characterized in that** the seal (14) comprises a toothing (39) in the region of the water outlet (13).

10. Kettle according to Claim 1, **characterized in that** the thermostat (9) has a temperature range that can be limited to from 50°-80° C.

11. Kettle according to Claim 1, **characterized in that** the pedestal (1) comprises a mains lead receiving space (44), disposed around a connection region (43), in which a mains lead (40) can be accommodated.

12. Kettle according to one of Claims 1 and 11, **characterized in that** the mains lead (40) can be wound around a mains lead cleat (42).

13. Kettle according to one of Claims 1 and 11 and 12, **characterized in that** a side wall (46) comprises mains lead securing apertures (35) through which the mains lead (40) can be guided out, determining the necessary length.

14. Kettle according to one of Claims 1 and 11, **characterized in that** anti-slip studs (45) are disposed on the underside of the pedestal (1).

## Revendications

1. Bouilloire avec mise hors circuit de sécurité, dans laquelle un récipient pour l'eau comprenant une partie inférieure (11) est placé sur un socle (1) pour l'alimentation en courant, un chauffage (10) et un limiteur de température étant disposés dans la partie inférieure, et un couvercle (3), avec une sortie de vapeur intégrée (17), qui est pourvu ou non d'un guidage à tiges de retenues (33) pour un filtre en barre (30), et qui peut être posé sur le récipient pour l'eau (2), **caractérisée en ce que**
le récipient pour l'eau (2) est connecté par adhérence et par blocage à une partie inférieure (11) présentant une poignée (4),
le couvercle (3) est réalisé en deux parties, se composant d'une partie supérieure de couvercle (15) et d'un support d'étanchéité (16),
et pouvant être verrouillé sur le récipient pour l'eau (2) au moyen d'une patte (24) prévue sur la partie supérieure du couvercle (15), qui vient en prise dans un blocage du couvercle (19) de la poignée (4) ou du recouvrement de la poignée (5),
**en ce que** dans un fond (8) de la partie inférieure (11), est disposé un commutateur (9) connecté au limiteur de température,
et **en ce qu'**un commutateur d'arrêt de vapeur (20) est intégré dans la poignée (4) avec laquelle le récipient pour l'eau (2) et la partie inférieure (11) qui lui est connectée peuvent être retirés du socle (1), ce commutateur communiquant par le biais d'un conduit de vapeur (18) avec la sortie de vapeur (17) du couvercle (3).

2. Bouilloire selon la revendication 1, **caractérisée en ce que** le récipient pour l'eau (2) présente un support (22) dans la partie de poignée de la partie inférieure (11).

3. Bouilloire selon la revendication 1 ou 2, **caractérisée en ce que** le récipient pour l'eau (2) est collé à sa partie d'arête inférieure au chauffage (10).

4. Bouilloire selon l'une quelconque des revendications 1 à 3, **caractérisée en ce que** la poignée (4), y compris un recouvrement de poignée (5), est fixée au support (22).

5. Bouilloire selon l'une quelconque des revendications 1, 2 et 4, **caractérisée en ce que** le commutateur d'arrêt de vapeur (20) est disposé dans la partie supérieure de la poignée (4).

6. Bouilloire selon la revendication 1, **caractérisée en ce que** le support d'étanchéité (16) du couvercle (3) présente un joint (14) périphérique inséré dans une rainure (29).

7. Bouilloire selon les revendications 1 et 6, **caractérisée en ce que** le support d'étanchéité (16) présente une sortie de vapeur (17) et une sortie pour l'eau (13).

8. Bouilloire selon l'une quelconque des revendications 1, 6 et 7, **caractérisée en ce que** la sortie d'eau (13) présente un filtre à calcaire (36).

9. Bouilloire selon l'une quelconque des revendications 1 à 6 et 8, **caractérisée en ce que** le joint (14) présente dans la région de la sortie d'eau (13) une denture (39).

10. Bouilloire selon la revendication 1, **caractérisée en ce que** le limiteur de température (9) présente une plage de température limitable de 50° à 80°C.

11. Bouilloire selon la revendication 1, **caractérisée en ce que** le socle (1) présente un espace de réception de câble (44) disposé autour d'une région de raccordement (43) accessible depuis sa partie inférieure, dans lequel un câble (40) peut être placé.

12. Bouilloire selon l'une quelconque des revendications 1 à 11, **caractérisée en ce que** le câble (40) peut être enroulé autour d'une décharge de traction (42).

13. Bouilloire selon l'une quelconque des revendications 1 à 11 et 12, **caractérisée en ce qu'**une paroi latérale (46) présente des ouvertures de fixation de câble (35), à travers lesquelles le câble (40) peut être sorti, en fixant la longueur nécessaire.

14. Bouilloire selon l'une quelconque des revendications 1 et 11, **caractérisé en ce que** des patins antidérapants (45) sont disposés sur la face inférieure du socle (1).
